# EUROPÄISCHE PATENTSCHRIFT

(11) **EP 0 596 888 B1**
(45) Veröffentlichungstag und Bekanntmachung des Hinweises auf die Patenterteilung: **02.12.1998**
(21) Anmeldenummer: 92905750.3
(22) Anmeldetag: 07.03.1992
(51) Int. Cl.: C03B 17/02

(54) **STRANGFÖRMIGE PROFILE AUS GLAS**
EXTRUDED GLASS SECTIONS
PROFILES EXTRUDES EN VERRE

(30) Priorität: 06.09.1991 DE 9111088 U
(43) Veröffentlichungstag der Anmeldung: 18.05.1994
(73) Patentinhaber: TECHNISCHE GLASWERKE ILMENAU GmbH, 98693 Ilmenau (DE)
(72) Erfinder: KÜMMERLING, Andreas, D-6300 Ilmenau (DE); CASPAR, Dieter, D-6316 Stützerbach (DE)
(74) Vertreter: Liedtke, Klaus, Dr.
(86) Internationale Anmeldenummer: DE9200197
(87) Internationale Veröffentlichungsnummer: WO9304991

(56) Entgegenhaltungen:
- DE-B- 1 215 877
- DE-C- 561 650
- DE-C- 598 898
- US-A- 2 052 269
- US-A- 2 972 837

## Beschreibung

Die Erfindung betrifft strangförmige Profile aus Glas, insbesondere kontinuierlich gezogene strangförmige Profile mit Farbeffekt wie Glas- und Kapillarrohre mit Farbstreifen sowie Glasstäbe und Profile, die vorzugsweise zu Dekorerzeugnissen, Schmuckwaren, Floristenbedarfsartikeln oder Lichtwerbe- und Rcklameanlagen verarbeitet werden.

Bekannt sind strangförmige Erzeugnisse aus Glas in Form von kontinuerlich gezogenen Glasrohren und Kapillarrohren oder Stäben mit farbigem Effekt, die entweder ausgebildet sind als Glasrohre oder Glasstäbe, die in ihrem gesamten Volumen durchgehend eine bestimmte Farbe bzw. Farbschattierung besitzen oder als sogenannte Spezialrohre mit ein oder zwei Farbstreifen oder als Kapillarrohre für Thermometer mit einer streifenförmigen Farbeinlage. Diese strangförmigen Profilerzeugnisse aus Glas bestehen entsprechend ihrer unterschiedlichen Anwendung entweder vollständig aus farbigem Glas oder sie besitzen auf ihrer Oberfläche einen oder mehrere farbige Streifen zur Kennzeichnung ihrer Anwendung, z.B. als Thermometer- oder Laborglas, oder sie besitzen zwei farbige Streifen als Ablesemarkierung, z.B. bei Kapillarrohren.

Nach der USA-Patentschrift Nr. 2052269 ist eine Vorrichtung zum Ziehen von Thermometerrohren, d.h. Kapillarrohren bekannt, bei der ein oder zwei Farbeinlagen in einen Grundglasstrang eingeführt werden. Die Farbstreifen sind entsprechend der geringen Abmessungen des Kapillarrohres als äußerst dünne Streifen (ca. 0,1 mm) ausgebildet, sind hinter oder in Höhe der Kapillarrohröffnung als farbige Hinterlegung angeordnet und dienen zur deutlichen Erkennung und Ablesung der Flüssigkeitssäule in der Kapillarrohröffnung.
Durch dieses Patent ist bekannt, bei Kapillarrohren maximal zwei Farbkontrasteinlagen in einem Grundglas eines stabförmigen Profils an einer bestimmten Stelle anzuordnen, nach dem Patent sind sie hintereinander und hinter der Kapillaröffnung angeordnet und im Grundglas eingebettet. Sie haben eine besimmte Funktion, die Ablesbarkeit der Flüssigkeitssäule in der Kapillaröffnung zu verbessern. Die Farbkontrasteinlagen sind an einer bestimmten Stelle des Umfangs des Kapillarrohres angeordnet und nicht über den gesamten Umfang.

Vollständig gefärbte Glasrohre, -stäbe oder -profile bestehen vollständig aus Farbglas. Glas- und Kapillarrohre mit Farbstreifen bestehen aus einem mit farbigen Emaillestreifen hinterlegten Klarglasprofil in Form eines "Überfang"- Glasprofils. Dabei sind vorzugsweise ein oder zwei farbige Glasflüsse (Emaillen oder Glasfarben) in einem thermoplastischen Glasfluß eines Grundglases eingebracht.

Der wesentliche Nachteil dieser bekannten mit Farbstreifen überfangenen Glasrohre oder anderer Glasprofile mit Farbeffekt besteht darin, daß je strangförmigem Profil nur eine Farbe oder zwei Farben längs des Profils angebracht sind und diese Farbe bzw. Farben den Abschluß des äußeren und zum Teil des inneren Umfanges bilden. Das bedingt, daß in der Weiterverarbeitung der Kontakt mit Sauerstoff bei höheren Temperaturen zum irreversiblen Zerstören der Farben führt, insbesondere bei den Farben Rot und Gelb.

Die Verarbeitung dieser Glasrohre bedingt aufgrund der Anordnung der Farbstreifen am inneren oder äußeren Umfang der Rohre während der Weiterverarbeitung meist Veränderungen der Farbeffekte.
Mit einem oder zwei farbigen Streifen gekennzeichnete Glasrohre oder die nach den Patenten DD-WP 25348, DD-WP 62407 und DE-AS 1596665 bekannten Kapillarrohre aus Glas mit Farbsteifen sind jeweils nur für Erzeugnisse mit bestimmten Anwendungszwecken in der Meßtechnik einsetzbar. Dabei sind die Farbstreifen für diese Glas- oder Kapillarrohre über deren Querschnittsfläche in definierter ungleichmäßiger Lage angeordnet. Die bekannten kontinuierlich gezogenen Glas- und Kapillarrohre mit Farbstreifen weisen aufgrund ihrer Herstellung und aufgrund ihrer geometrischen Abmessungen stets eine bestimmte gleiche Farbintensität auf, die durch die Erzeugnisdicke bedingt ist.
Nach der Erfindung sollen strangförmige Profile, insbesondere kontinuierlich gezogene strangförmige Profile aus Glas mit Farbeffekt geschaffen werden, bei denen mehrere Farben längs des Erzeugnisprofils so angeordnet sind, daß die Farbe bzw. die Farben in der Weiterverarbeitung in ihrer Intensität erhalten bleiben ohne irreversible Zerstörungen bzw. Veränderungen zu erlangen.

Die Erfindung stellt sich daher die Aufgabe, strangförmige Profile aus Glas, insbesondere kontinuierlich gezogene strangförmige Profile mit farbigen Effekten zu entwickeln, die es gestatten, durch eine besondere Anordnung der Farbstreifen eine hohe Farbvarianz und Farbbeständigkeit bei gleichen geometrischen Abmessungen zu gewährleisten und eine verbesserte Qualität der strangförmigen farbigen Profile für deren vereinfachte Weiterverarbeitung zu erreichen.

Erfindungsgemäß wird die Aufgabe dadurch gelöst, daß die kontinuierlich gezogenen strangförmigen Glasprofile mit Farbeffekt, die bekannterweise aus einem Grundglas mit einer oder zwei Farbeinlage(n) bestehen, dadurch gekennzeichnet sind, daß mehrere Farbeinlagen in den hohlen oder stabförmigen sowie runden oder vieleckigen Strangprofilen über deren gesamte Querschnittsfläche gleichmäßig verteilt angeordnet sind. Die Farbeinlagen sind dabei erfindungsgemäß mehrfarbig ringförmig geschlossen oder unterbrochen, halbringförmig, segmentförmig, rund und/oder vieleckig und/oder verdreht in unterschiedlicher Schichtdicke und in bestimmtem Abstand vom äußeren und/oder inneren Umfang im Grundglas angeordnet. Sie bestehen erfindungsgemäß aus opakem oder transparentem Farbglas oder Emaille. Erfindungsgemäß sind die Farbeinlagen zum äußeren und inneren Umfang der strangförmigen Profile in einem abstand von mindestens 0,2 mm und vorzugsweise mittig innerhalb der Wanddicke bei Hohlprofilen oder des Radius bei Stabprofilen, d.h. innerhalb der Hälfte der Wanddicke der Hohlprofile bzw. des Radius der Sabprofile angeordnet. Da die Farbeinlagen über die gesamte Querschnittsfläche verteilt stets vollständig im Grundglas eingeschlossen angeordnet sind können bei gleichen Profilabmessungen und -größen gleiche Farbtransparenzen und währen der Weiterverarbeitung keine Veränderungen der Farbeffekte auftreten.

Erfindungsgemäß sind die strangförmigen Profile in Einzelheiten dadurch gekennzeichnet, daß die Farbeinlagen ringförmig, halbringförmig oder segmentförmig geschlossen mehrfarbig angeordnet sind. Außerdem sind mehrere Farbeinlagen innerhalb der strangförmigen Profile segmentförmig in gleichem oder unterschiedlichem Winkel zueinander mehrfarbig ausgeführt. Diese Profile sind in Varianten dadurch gekennzeichnet, daß die Farbeinlagen sich segmentförmig in gleichen oder unterschiedlichen Winkeln überlappen zwei oder mehrfarbig ausgebildet sind. Dadurch ist es möglich, Profile mit mehreren Farbmischungen zu schaffen, d.h. Profile, die über ihren Umfang gleichzeitig aus Grundfarben und aus Mischfarben bestehen.

Profile mit besonderen mehrfarbigen Farbeffekten sind erfindungsgemäß durch verschieden gestaltete Farbeinlagen in unterschiedlicher, vorzugsweise runder, vieleckiger oder beliebig konturenförmiger Form in gleichen oder unterschiedlichen Winkeln zueinander mehrfarbig ausgeführt.
Außerdem sind die genannten erfindungsgemäß gestalteten strangförmigen Profile dadurch gekennzeichnet, daß Farbeinlagen um ihre Längsachse schrauben- oder spiralförmig verdreht sein können. Bei unterschiedlichen Abmessungen und Wanddicken der strangförmigen Profile ist die Schicht der Farbeinlagen vorzugsweise gleichmäßig dick und unabhängig von der Schichtdicke des Grundglases. Dadurch entstehen bei gleichen Abmessungen und Größen der Profile verschiedene Farbeffekte und -nuancen. Außerdem ist es erfindungsgemäß möglich, daß die Schicht einer oder mehrerer segmentförmiger Farbeinlagen unterschiedlich dick ausgeführt ist.
Unterschiedliche Farbtransparenzen bei gleichen Profilgrößen sind die Folge. Durch die gleichmäßige Schichtdicke der Farbeinlagen werden unabhängig von Abmessungen und Durchmesser der Profile gleiche Farbeffekte und -transparenzen für gleiche Profilgrößen erzielt.

Vorteilhafterweise kann der Farbeffekt in der jeweiligen Farbe von schwach bis dunkel erzielt werden, indem nicht wie beim bekannten Farbrohr bzw. Farbstab die Wanddicke bzw. der Stabdurchmesser geändert werden muß, sondern bei gleicher Wanddicke bzw. gleichem Stabdurchmesser die Dicke des farbigen Innenfanges von schwach (0,03 mm, z.B. sehr helles, durchscheinendes Gelb) bis strark (0,9 mm, z.B. dunkles, weniger durchscheinendes Gelb) variiert werden kann.

Vorteile durch erfindungsgemäße Profile sind in ihrer maschinellen Fertigung, dem schnellen Farbwechsel, der guten Weiterverarbeitbarkeit (kein Farbausbrennen) und in der Farbvarianz bei gleichen geometrischen Abmessungen zu sehen. Besondere Einsatzgebiete sind der Floristenbedarf, Leuchtwerbungen und Kunstglasbläser.

Die erfindungsgemäßen strangförmigen Profile aus Glas sollen anhand von Ausführungsbeispielen näher erläutert werden.
In den Zeichnungen stellen dar:
- Figur 1:: ein Glasrohr mit einer ringförmigen Farbeinlage
- Figur 2:: einen Glasstab mit einer ringförmigen Farbeinlage
- Figur 3:: ein strangförmiges Hohlprofil mit einer ringförmigen Farbeinlage
- Figur 4:: ein strangförmiges Stabprofil mit einer ringförmigen Farbeinlage
- Figur 5:: ein strangförmiges Profil mit halbringförmigen Farbeinlagen
- Figur 6:: ein strangförmiges Profil mit einer mehrfarbig geschlossenen Einlage, bestehend aus drei segmentförmigen Farbeinlagen
- Figur 7:: ein strangförmiges Profil mit zwei sich überlappenden Farbeinlagen
- Figur 8:: ein strangförmiges Profil mit drei sich überlappenden Farbeinlagen
- Figur 9:: ein strangförmiges Profil mit einer zweifach unterbrochenen einfarbigen Farbeinlage
- Figur 10:: ein strangförmiges Profil mit einer dreifach unterbrochenen einfarbigen Farbeinlage
- Figur 11:: ein strangförmiges Profil mit zwei segmentförmigen Farbeinlagen
- Figur 12:: ein strangförmiges Profil mit einer mehrfarbig unterbrochenen Einlage, bestehend aus drei segmentförmigen Farbeinlagen
- Figur 13:: ein strangförmiges Profil mit zwei runden einfarbigen Farbeinlagen
- Figur 14:: ein strangförmiges Profil mit drei runden einfarbigen Farbeinlagen
- Figur 15:: ein strangförmiges Profil mit zwei zweifarbigen Farbeinlagen
- Figur 16:: ein strangförmiges Profil mit drei dreifarbigen Farbeinlagen
- Figur 17:: ein strangförmiges Profil mit drei- und vieleckigen Farbeinlagen
- Figur 18:: ein strangförmiges Profil mit verdrehten Farbeinlagen

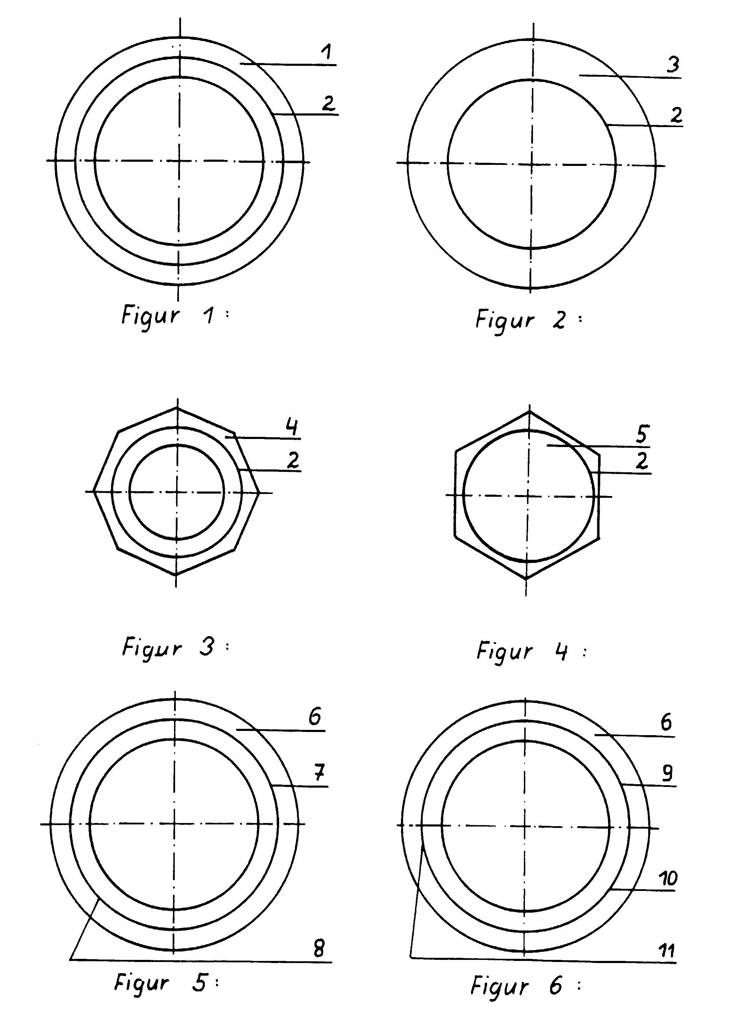

Die Figuren 1.....18 werden in Ausführungsbeispielen näher beschrieben, wobei die Figuren 1....5, 9, 11, 13, 15 mit einer- oder zwei Farbeinlagen als Stand der Technik angesehen werden.
Figur 1, 2, 3 und 4 zeigen ein Glasrohr 1, einen Glasstab 3, ein strangförmiges Hohlprofil 4 und ein strangförmiges Stabprofil 5 mit einem äußeren Durchmesser bzw. äußerer Abmessung von ca. 18 mm und beim Glasrohr 1 und strangförmiges Hohlprofil 4 mit einer Wanddicke von ca. 0,9 mm. Innerhalb der Wandung des Glasrohres 1 bzw. strangförmigen Hohlprofils 4 und der Querschnittsfläche des Glasstabes 3 bzw. strangförmigen Stabprofils 5 befindet sich eine ringförmige Farbeinlage 2 mit einer Dicke von ca. 0,12 mm. Die Farbeinlage 2 liegt beim Glasrohr 1 bzw. strangförmigen Hohlprofil 4 mittig im Grundglas und beim Glasstab 3 bzw. strangförmigen Stabprofil 5 ca. 1,0 mm von der äußeren Abmessung entfernt.

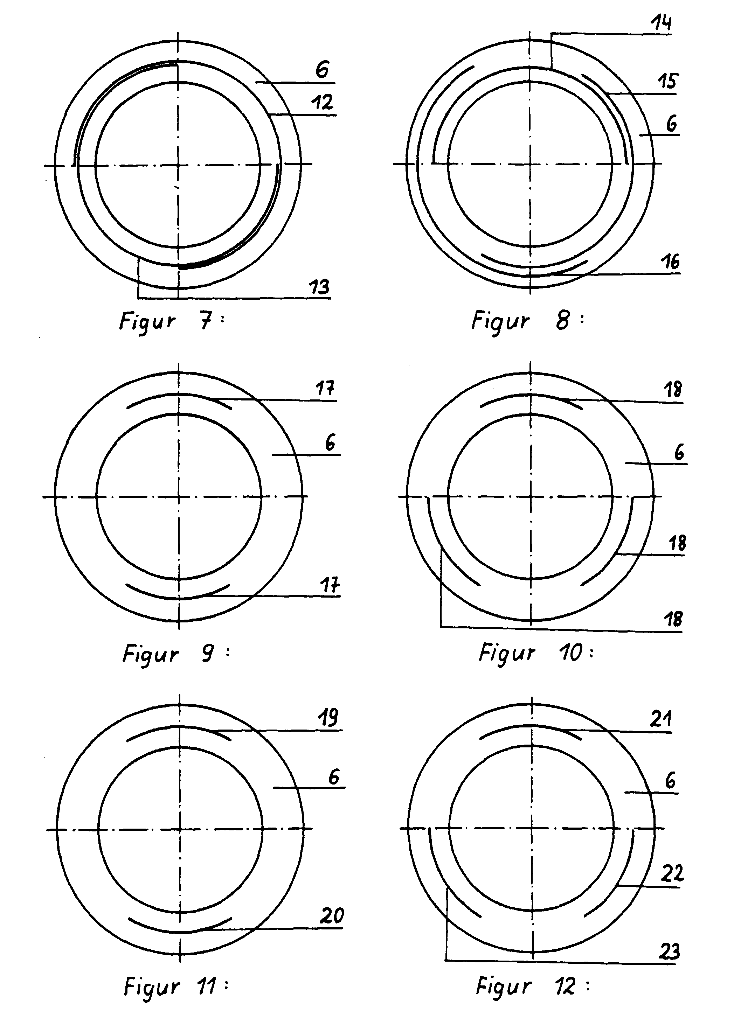

In den Figuren 5 und 6 werden ein strangförmiges Profil 6 mit dem äußeren Durchmesser von ca. 18 mm und einer Wanddicke von ca. 0,9 mm dargestellt. In der Figur 5 sind zwei halbringförmige Farbeinlagen 7, 8 mit einer Farbdicke von ca. 0,12 mm mittig im Grundglas eingelagert. Die Figur 6 hat mittig im Grundglas drei segmentförmige Farbeinlagen 9, 10, 11 mit einer Farbdicke von ca. 0,12 mm. Die halbringförmigen Farbeinlagen 7, 8 sind in Figur 5 zweifarbig. Die segmentförmigen Farbeinlagen 9, 10, 11 im Ausführungsbeispiel Figur 6 im Winkel von je 120° sind dreifarbig. Es handelt sich um eine mehrfarbige geschlossene Einlage.

Die Figuren 7 und 8 stellen ein strangförmiges Profil 6 in den gleichen Abmessungen wie Figur 5 und 6 dar. In der Figur 7 sind mittig im Grundglas zwei verschiedene transparente segmentförmige Farbeinlagen 12, 13 als Ring so eingelagert, daß jede Farbeinlage 12, 13 im strangförmigen Profil 6 einen Winkel von 270° überstreicht. Zueinander sind beide segmentförmige Farbeinlagen 12, 13 um 180° versetzt.
Durch die sich überlappenden segmentförmigen Farbeinlagen 12, 13 entstehen zwei verschiedene gegenüberliegende Grundfarben und zwei gleiche gegenüberliegende Mischfarben.

Die Farbdicke der Farbeinlagen 12, 13 ist so gewählt, daß jeweils das mittlere Drittel jedes Segmentes eine Dicke von ca. 0,08 mm hat. Damit besitzen sowohl die einzelnen Grundfarben als auch die sich überlappenden Grundfarben, d.h. die Mischfarben die gleiche Transparenz.

In der Figur 8 sind mittig im Grundglas drei verschiedene transparente segmentförmige Farbeinlagen 14, 15, 16 als Ringe so eingelagert, daß jede Farbeinlage 14, 15, 16 einen Winkel von 180° überstreicht und sie zueinander um 120° versetzt angeordnet sind. Somit entstehen drei verschiedene Grundfarben und drei verschiedene Mischfarben, die jeweils einen Winkel von 60° überstreichen. Die Schichtdicke der Farbeinlagen 14, 15, 16 ist wie in der Figur 7 ausgebildet.

In den Figuren 9, 10, 11 und 12 wird ein strangförmiges Profil 6 dargestellt, das eine äußere Abmessung von ca. 18 mm und eine Wanddicke von ca . 0,9 mm besitzt. Mittig im Grundglas des strangförmigen Profils 6 der Figur 9 ist eine zweifach unterbrochene Farbeinlage 17 im Winkel von je 60° eingelagert, die Unterbrechungen haben einen Winkel von je 120°. Die Farbdicke der vorzugsweise opaken Farbeinlagen 17 beträgt ca. 0,20 mm. Ähnlich ist in Figur 10 eine dreifach unterbrochene Farbeinlage 18 im Winkel von je 60° eingelagert, die Unterbrechungen haben einen Winkel von 60°. Die Farbdicke entspricht der in Figur 9 beschriebenen.

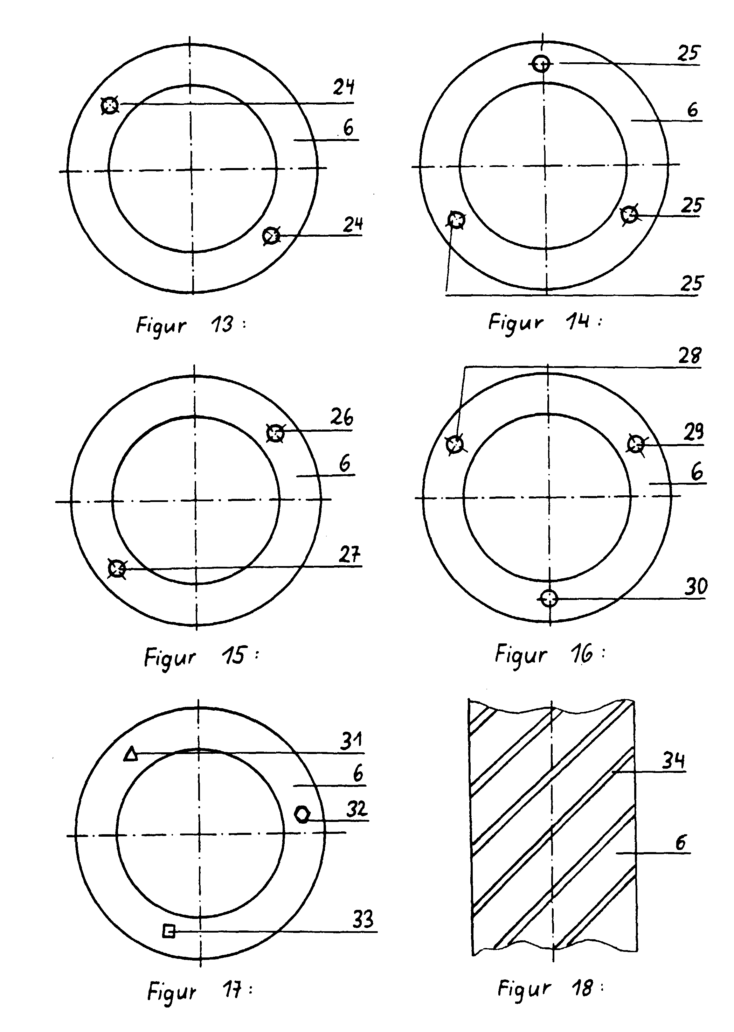

In der Figur 11 sind zwei zweifarbige segmentförmige Farbeinlagen 19, 20 eingelagert, deren Farbdicke, Lage und Winkelung wie in Figur 9 dargestellt sind. Die Figur 12 zeigt drei dreifarbige segmentförmige Farbeinlagen 21, 22, 23, die in Lage, Winkelung und Farbdicke wie in Figur 10 dargestellt sind. In den Figuren 13, 14, 15 und 16 wird ein strangförmiges Profil 6 im äußeren Durchmesser von ca. 18 mm und einer Wanddicke von ca. 0,9 mm dargestellt. Mittig im Grundglas des strangförmigen Profils 6 sind in der Figur 13 in einer Dicke von ca. 0,20 mm zwei runde gleichfarbige Farbeinlagen 24 gegenüberliegend eingelagert. In der Figur 14 sind drei runde gleichfarbige Farbeinlagen 25 in einer Dicke von 0,30 mm um 120° versetzt eingelagert. Die Figur 15 entspricht der Figur 13, wobei die Farbeinlagen 26, 27 verschiedenfarbig sind. Figur 16 stellt das strangförmige Profil 6 mit drei verschiedenfarbigen Farbeinlagen 28, 29, 30 dar. Anordnung und Dicke der Farbeinlagen 28. 29, 30 sind entsprechen der Figur ausgeführt.

In der Figur 17 eines strangförmigen Profils 6 mit der äußeren Abmessung von ca. 18 mm und der Wanddicke von ca. 0,9 mm sind mittig im Grundglas eine oder mehrere beliebig konturenförmige gleichmäßig oder ungleichmäßig dreieckige Farbeinlage(n) 31, viereckige Farbeinlage(n) 33 oder vieleckige Farbeinlage(n) 32 eingelagert. Die gleichfarbigen oder mehrfarbigen Farbeinlagen 31.....33 haben Kantenlängen von ca. 0,15 mm.

Die Farbeinlagen 17 bis 33 in den Figuren 9-17 können auch in unterschiedlichen Winkeln zueinander im strangförmigen Profil 6 liegen.

Die äußeren Abmessungen der strangförmigen Profile 1, 3, 4, 5, 6 in den beschriebenen Ausführungsbeispielen liegen vorzugsweise in den Bereichen:

| | |
|---|---|
| Abmessung/Durchmesser | 2.... 25 mm, |
| Wanddicke | 0,6.... 2 mm. |

Ausgehend von diesen Abmessungen kann die Schicht aller Farbeinlagen für strangförmige Profile ungleicher Abmessungen gleiche Farbdicke bzw. für strangförmige Profile gleicher Abmessungen unterschiedliche Farbdicke besitzen, um verschiedene Farbtransparenzen zu erreichen.

Die Figur 18 stellt ein strangförmiges Profil 6 dar, in welchem vorzugsweise sechs gleich- oder mehrfarbige Streifeneinlagen angeordnet sind, die um je 60° versetzt sind, mittig im Grundglas liegen und um die Längsachse des strangförmigen Profils 6 verdreht als spiralförmige Farbeinlage 34 sichtbar sind.
Weitere Ausführungsvarianten innerhalb der erfindungsgemäßen Lösung ergeben sich durch unterschiedliche Farben, Schichtdicken, Anzahl und Anordnung der Farbeinlagen.

### Aufstellung der verwendeten Bezugszeichen

- 1: Glasrohr
- 2: ringförmige Farbeinlage
- 3: Glasstab
- 4: strangförmiges Hohlprofil
- 5: strangförmiges Stabprofil
- 6: strangförmiges Profil ( 1, 3, 4, 5)
- 7: halbringförmige Farbeinlage, zweifarbig
- 8: halbringförmige Farbeinlage, zweifarbig
- 9: segmentförmige Farbeinlage, drei- und mehrfarbig
- 10: segmentförmige Farbeinlage, drei- und mehrfarbig
- 11: segmentförmige Farbeinlage, drei- und mehrfarbig
- 12: überlappende segmentf. Farbeinlage, zweifach
- 13: überlappende segmentf. Farbeinlage, zweifach
- 14: überlapp. segmentf. Farbeinlage, drei- bzw. mehrfach
- 15: überlapp. segmentf. Farbeinlage, drei- bzw. mehrfach
- 16: überlapp. segmentf. Farbeinlage, drei- bzw. mehrfach
- 17: zweifach unterbrochene Farbeinlage
- 18: drei- und mehrfach unterbrochene Farbeinlage
- 19: segmentförmige Farbeinlage, zweifarbig
- 20: segmentförmige Farbeinlage, zweifarbig
- 21: segmentförmige Farbeinlage, drei- und mehrfarbig
- 22: segmentförmige Farbeinlage, drei- und mehrfarbig
- 23: segmentförmige Farbeinlage, drei- und mehrfarbig
- 24: runde Farbeinlage, gleichfarbig
- 25: drei und mehr runde Farbeinlagen, gleichfarbig
- 26: runde Farbeinlage, zweifarbig
- 27: runde Farbeinlage, zweifarbig
- 28: runde Farbeinlage, drei- oder mehrfarbig
- 29: runde Farbeinlage, drei- oder mehrfarbig
- 30: runde Farbeinlage, drei- oder mehrfarbig
- 31: dreieckige Farbeinlage, gleich- oder mehrfarbig
- 32: viereckige Farbeinlage, gleich- oder mehrfarbig
- 33: vieleckige Farbeinlage, gleich- oder mehrfarbig
- 34: spiralförmige Farbeinlage, gleich- oder mehrfarbig

## Patentansprüche

1. Strangförmige Profile aus Glas, ausgebildet als gezogene strangförmige Rohr-, Kapillarrohr- oder Stabprofile und bestehend aus einem Grundglas mit bandförmigen Farbeinlagen, **dadurch gekennzeichnet**,
- daß sie als Hohl- oder Stabprofile (4;5) mit rundem oder vieleckigem äußeren Umfang und unendlicher Länge mehr als zwei ein- oder mehrfarbige Farbeinlagen über ihre Querschnittsfläche im Grundglas gleichmäßig verteilt besitzen,
- daß diese Farbeinlagen ringförmig geschlossen, ringförmig unterbrochen oder beliebig konturenförmig auf einem oder mehr als einem Radius auf der Querschnittsfläche verteilt sind,
- daß diese Farbeinlagen einen Abstand von mindestens 0,2 mm vom äußeren und vom inneren Umfang des Grundglasses besitzen und
- daß diese Farbeinlagen aus opaken oder transparenten farbigen Gläsern bestehen.

2. Strangförmige Profile nach Anspruch 1, **dadurch gekennzeichnet**,
- daß die auf einem Radius liegenden Farbeinlagen in einem Abstand von 0,5 der Wanddicke bei Hohlprofilen (4) oder in einem Abstand von 0,5 des Radius bei Stabprofilen (5) angeordnet sind.

3. Strangförmige Profile nach Anspruch 1 oder 2, **dadurch gekennzeichnet**,
- daß die Farbeinlagen im Grundglas auf einem Radius ringförmig, halbringförmig oder mehrfarbig segmentförmig geschlossen (10) angeordnet sind.

4. Strangförmige Profile nach einem der Ansprüche 1 bis 3, **dadurch gekennzeichnet**,
- daß mehrere mehrfarbige Farbeinlagen im Grundglas auf einem Radius segmentförmig unterbrochen (18, 21, 22, 23) angeordnet sind.

5. Strangförmige Profile nach einem der Ansprüche 1 und 2, **dadurch gekennzeichnet**,
- daß mehrere mehrfarbige Farbeinlagen im Grundglas auf mehreren Radien segmentförmig unterbrochen und sich überlappend (12-16) angeordnet sind.

6. Strangförmige Profile nach einem der Ansprüche 1 bis 5, **dadurch gekennzeichnet**,
- daß mehrere mehrfarbige Farbeinlagen im Glundglas rund, vieleckig oder beliebig konturenförmig ( 28-33) in verschiedenen Abständen zueinander auf der Querschnittsfläche verteilt angeordnet sind.

7. Strangförmige Profile nach einem der Ansprüche 1 bis 6, **dadurch gekennzeichnet**,
- daß mehrere mehrfarbige Farbeinlagen um die Mittelachse des strangförmigen Profils (6) spiralförmig verdreht (34) angeordnet sind.

8. Strangförmige Profile nach einem der Ansprüche 1 bis 7, **dadurch gekennzeichnet**,
- daß die Schichtdicke einer über den gesamten Umfang ring-, segment- oder konturenförmig angeordneten Farbeinlage unterschiedlich ausgebildet ist und abhängig von den geometrischen Abmessungen des strangförmigen Profils (6) deren Farbintensivität bestimmt.

9. Strangförmige Profile nach einem der Ansprüche 1 bis 8, **dadurch gekennzeichnet**,
- daß die Hohl- oder Stabprofile (4;5) mit den Farbeinlagen um ihre Mittelachse verdreht sind.

## Claims

1. String-shaped sections made of glass, designed as drawn string-shaped tube, capillary tube, or rod sections, and consisting of a base glass with ribbon-shaped colour inserts, **characterised in that**
- hollow or rod sections (4;5) of this kind with a round or polygonal external circumference and an infinite length have more than two single or multicoloured colour inserts which are evenly distributed over their cross-sectional area in the base glass;
- these colour inserts are distributed in the form of closed rings, discontinuous rings, or following any outline along one ore more radii over the cross-sectional area;
- these colour inserts have a distance of at least 0.2 mm with regard to the external and to the internal circumference of the base glass; and in that
- these colour inserts are made of opaque or transparent coloured glasses

2. String-shaped sections as claimed in claim 1, **characterised in that**
- the colour inserts situated on one radius are arranged at a distance of 0.5 times the wall thickness in hollow sections (4), or at a distance of 0.5 times the radius in case of rod profiles (5).

3. String-shaped sections as claimed in claim 1 or 2, **characterised in that**
- the colour inserts are arranged in a closed way and shaped like a ring, like half a ring or like multicoloured segments (10) on one radius in the base glass.

4. String-shaped sections as claimed in any claim I through 3, **characterised in that**
- several multicoloured colour inserts are arranged in a discontinuous way and shaped like segments (18, 21, 22, 23) on one radius in the base glass.

5. String-shaped sections as claimed in any claim 1 and 2, **characterised in that**
- several multicoloured colour inserts are arranged in a discontinuous way, shaped like segments and overlapping one another (12-16) on several radii in the base glass.

6. String-shaped sections as claimed in any claim 1 through 5, **characterised in that**
- several multicoloured colour inserts are arranged in a round, or polygonal shape, or according to any outline (28-33), being distributed at several distances with regard to one another over the cross-sectional area in the base glass.

7. String-shaped sections as claimed in any claim 1 through 6, **characterised in that**
- several multicoloured colour inserts are twisted in a helicoidal form around the centre line (34) of the string-shaped section (6)

8. String-shaped sections as claimed in any claim 1 through 7, **characterised in that**
- the thickness of layer of a colour insert, which is arranged like a ring, a segment, or an outline on the entire circumference, has different values, and that it determines the intensity of colour of the colour insert depending on the geometrical dimensions ofthe string-shaped section (6).

9. String-shaped sections as claimed in any claim 1 through 8, **characterised in that**
- the hollow or rod sections (4;5) have colour inserts which are twisted around their centre lines.

## Revendications

1. Profils en forme de barre faits de verre, étirés en forme de profil de barre, de tube, de tube capillaire ou plein, et consistant d'une base de verre avec incrustations de couleurs, **caractérisés en**
- ce qu'ils peuvent, en tant que profils creux ou pleins (4;5) à pourtour rond ou rectangulaire et d'une longueur infiniment grande, posséder plus de deux incrustations d'une ou de plusieurs couleurs uniformément réparties sur la superficie de la section de leur base de verre,
- ce que ces incrustations de couleur sont réparties sous forme circulaire fermée ou interrompue ou encore sous forme de contours de forme quelconque sur un ou plus d'un rayon de la superficie de la section,
- ce que ces incrustations de couleur sont situées à une distance d'au moins 0,2 mm du pourtour externe et du pourtour interne de la base de verre et
- ce que ces incrustation de couleur sont constituées de pièces de verre colorées opaques ou transparentes.

2. Profils en forme de barre selon le revendication 1, **caractérisés en**
- ce que les incrustations de couleur situées sur un rayon sont réparties à une distance de 0,5 de l'épaisseur de paroi dans le cas de profils creux (4) ou à une distance de 0,5 du rayon dans le cas de profils pleins (5).

3. Profils en forme de barre selon les revendications 1 ou 2, **caractérisés en**
- ce que les incrustations de couleur sont réparties dans la base de verre sous forme d'anneau, de demi-anneau ou de segments multicolores fermés (10)

4. Profils en forme de barre selon l'une des revendications 1 à 3, **caractérisés en**
- ce que plusieurs incrustations de couleur multicolores sont réparties dans la base de verre sur un rayon sous forme de segments interrompus (18, 21, 22, 23)

5. Profils en forme de barre selon l'une des revendications 1 et 2, **caractérisés en**
- ce que plusieurs incrustations de couleur multicolores sont réparties dans la base de verre sur plusieurs rayons sous forme de segments interrompus et se recouvrant (12-16).

6. Profils en forme de barre selon l'une des revendications 1 à 5, **caractérisés en**
- ce que plusieurs incrustations de couleur multicolores rondes, rectangulaires ou sous forme de contour de configuration quelconque (28-33) sont réparties dans la base de verre à différentes distances les unes des autres sur la superficie de la section.

7. Profils en forme de barre selon l'une des revendications 1 à 6, **caractérisés en**
- ce que plusieurs incrustations de couleur multicolores sont réparties autour de l'axe central du profil en forme de barre (6) sous forme de spirale gauchie (34).

8. Profils en forme de barre selon l'une des revendications 1 à 7, **caractérisés en**
- ce que l'épaisseur de la couche d'une incrustation de couleur en forme d'anneau, de segment ou de contour placée sur tout le pourtour est formée différemment et détermine l'intensité de sa coloration selon les dimensions géométriques du profil en forme de barre (6).

9. Profils en forme de barre selon l'une des revendications 1 à 8, **caractérisés en**
- ce que les profils creux et pleins (4;5) avec les incrustations de couleur autour de leur axe central sont gauchis.
